Europäisches Patentamt

European Patent Office

Office européen des brevets

(11) Publication number: **0 370 042 B1**

## EUROPEAN PATENT SPECIFICATION

(45) Date of publication of patent specification: **04.11.92**  (51) Int. Cl.5: **C03B 11/00**

(21) Application number: **88906158.6**

(22) Date of filing: **10.06.88**

(86) International application number:
**PCT/SE88/00314**

(87) International publication number:
**WO 89/00152 (12.01.89 89/02)**

(54) **METHODS AND APPARATUS FOR FORMING PRESSED GLASS ARTICLES.**

(30) Priority: **07.07.87 US 70403**

(43) Date of publication of application:
**30.05.90 Bulletin  90/22**

(45) Publication of the grant of the patent:
**04.11.92 Bulletin  92/45**

(84) Designated Contracting States:
**AT BE CH DE FR GB IT LI LU NL SE**

(56) References cited:
**US-A- 4 652 292**

(73) Proprietor: **AGA AKTIEBOLAG**

**S-181 81 Lidingö(SE)**

(72) Inventor: **ZIEGLER, Michael, J.**
**8304 Dogwood Lane**
**Parma, OH 44130(US)**
Inventor: **MILLWARD, Barry**
**47 W. Bell Meadow Lane**
**Chagrin Falls, OH 44022(US)**
Inventor: **ROBB, Kenneth, P., Jr.**
**4419 N. Norman Dr.**
**Stow, OH 44224(US)**

(74) Representative: **Wiedemann, Bernd**
**AGA AKTIEBOLAG Patent Department**
**S-181 81 Lidingö(SE)**

## Description

### Field of the invention

The present invention relates generally to the manufacture of glass articles that are formed by press molding, and, more particularly, to methods and apparatus for providing increased productivity in a glass manufacturing process by utilizing cryogen that is introduced through injectors.

### Prior Art

In the molding of hollow glass articles such as beer mugs and the like using the "press-molding method", a gob of glass typically is inserted into a mold where it is pressed to form an article of desired form. Ambient air is used, not only to cool the newly formed glass article, but also to cool the press mechanism.

In the press molding of glass, it is customary to utilize flows of air as a cooling gas. Usually a gentle flow of air is established across the mold area, which is referred to by the term "low pressure air flow". Also, provision is made to direct a more intense, blastlike flow of air toward and into the hollow interiors of newly molded articles while the articles are still contained within their mold cavaties to speed cooling and solidification of the articles so that the articles can be removed as quickly as possible from their molds. The relatively high velocity flow of air that is employed intermittently (i.e. at times when a newly molded article is moved from the pressing station and is positioned in a cooling station so that the article is aligned with an injector tube through which a high velocity flow of air discharges) is referred to by the term "high pressure air flow".

In order to speed up the cooling of molded glass articles to diminish their mold retention times, proposals have been made to indirectly cool the articles by providing at least portions of their molds with cooling passages through which a fluid coolant is circulated. However, the degree to which mold cooling can be used to indirectly cool molded glass articles is limited not only by the tendency of this approach to induce defects (the number of defects induced in molded glass articles increases as mold temperatures are diminished), but also by the cost of forming cooling passages in the molds, and by the cost of providing suitable apparatus for maintaining controlled flows of coolant through the cooling passages.

While mold cooling provide some assistance in diminishing mold retention times, the retention times during which newly molded glass articles must be held in their molds to effect proper solidification continue to form "bottlenecks" that obstruct efforts to increase the productivity of existing molding equipment.

As is explained in US-A-4 553 999 and US-A-4 652 292 the use of flows of cold cryogen vapor that are introduced into mold cavities is applicable to a variety of glass molding techniques including press molding and blow molding. A flow of cold cryogen can be introduced into a mold cavity to cool a newly molded article and to cool such apparatus as has been used in the forming of the article. Thus molds can be recycled and reused more quickly than has previously been thought to be possible, and a very significant increase in productivity of molded articles is achieved while utilizing existing production facilities.

While uneven cooling of a molded glass article may create stress points, it does not cause significant warpage. Such stress points as are created in the forming of molded glass articles typically are dealt with by passing the articles through a lehr, a long furnace which tempers the glass by reheating it to about 480°C (about 900 degrees Fahrenheit), whereafter the glass is gradually cooled to allow the stress points to relieve themselves. Since the molded glass articles are put through a lehr, the only cooling that is necessary in conjunction with the actual molding of glass is a sufficient amount of cooling to assure that newly molded articles will retain their shape once they are extracted from the molds that have been used to form the articles.

What the inventions of the US Cases recognize is that, in the molding of a hollow glass article, the only cooling of a newly molded glass article that is necessary in order to permit the immediate discharge of the article from its mold is an amount of cooling that is adequate to give the glass enough strength to hold its shape. The inventions of the referenced US Cases address this very minimal need for cooling in a special way, namely by employing a very fast acting cooling technique that results in creating what essentially amounts to a solidified "skin" on the interior surface of a newly formed hollow glass article. Once this interior "skin" has been formed and has cooled sufficiently to act as a stable mainstay that will render the newly molded article shape-stable, the mold can be opened and the newly molded article can be removed.

The fast formation of an adequately cooled and rigidified interior "skin" permits a newly molded glass article to be extracted far more quickly from its mold than previously has been possible with prior glass molding cooling techniques. Because the mold can be recycled and reused more quickly than has previously been thought to be possible, and a very significant increase in productivity of molded articles is achieved while utilizing existing production facilities.

## Summary of the Invention

The present invention relates to manufacturing processes as claimed in claims 1 and 5 and to a hollow glass article manufacturing machine as claimed in claim 10.

The claimed processes are utilizing cryogen that is introduced through tube-in-a-tube type injectors, with a flow of cryogen from a high pressure source being fed through the inner of the injector tubes, and with cryogen from a low pressure source being continuously fed through the outer of the injector tubes to provide cooling and to keep the high pressure injector tubes purged of ambient air to prevent moisture condensation on and ice formation in and about the high pressure injector tubes.

The system of the present invention relates to the press molding of hollow glass articles by utilizing cooling gases that are mixtures of cryogen from a high pressure cryogen source, and air from a source of pressurized air.

The system of the present invention, like those of the referenced US Cases, takes advantage of the discovery that, once an interior surface skin has been formed in a newly molded glass article (as by the introduction into the hollow article of a relatively cold cooling gas), this interior skin may be utilized to provide shape stability for the newly formed article. Thus, newly moled articles of glass may be removed quite quickly from their molds, and the molds may be recycled and reused while the articles are completing their solidification.

In practice, a flow of cryogen from a high pressure source is introduced into the hollow interior of a newly molded glass article, e.g., a beer mug, along with a flow of air from a high pressure source. Separate inlet tubes serve as "injectors" for concurrently supplying cryogen and air to cool newly molded articles. The separate injectors for cryogen and air are oriented and configured to effect mixing of the cold cryogen with air at a location inside the hollow interiors of newly molded articles, with the injection of these cooling media being effected at a cooling station which is located as close as possible to the molding station where articles are press molded.

As a result of the practice of the present invention, cooling gases that are considerably reduced in temperature as compared with ambient air hasten the cooling and solidification of newly formed glass articles so that the time during which newly molded articles must be retained in their molds is significantly reduced, and the mold can be reused to more quickly repeat the molding process, thereby increasing productively at a relatively low cost.

## Brief Description of the Drawing

Other features and a fuller understanding of the invention may be had by referring to the following descriptions and claims, taken in conjunction with the accompanying drawing, wherein:

FIGURE 1 is a schematic side elevational view illustrating the first of four sequential steps in the view showing the introduction of a gob of molten glass into a mold;

FIGURE 2 is a schematic side elevational view of the second step, with the view showing the gob of molten glass in the bottom of the mold;

FIGURE 3 is a schematic side elevational view of the third step, with the view showing the press forming of a hollow glass article in the mold; and

FIGURE 4 is a schematic side elevational view of the fourth step, with the view showing the introduction of cooling media into the hollow interior of a newly molded glass article:

## Description of Preferred Embodiment

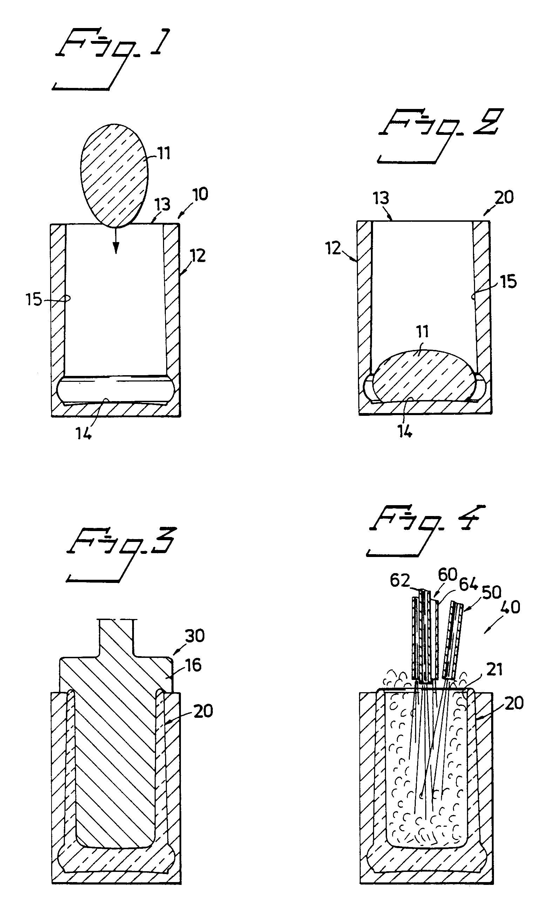

Referring to FIGURES 1 through 4, four work stations of a glass molding apparatus are depicted schematically and indicated generally by the numerals 10, 20, 30, 40. The work stations 10, 20, 30, 40 are utilized herein to depict a conventional series of sequential steps that are carried out by automated glass molding machinery to press-form a heated plastic gob of molten glass 11 being introduced into a cavity 15 of mold 12 through an open upper end 13 as shown in FIGURE 1 and deposited in the bottom 14 of mold 12, as is shown in FIGURE 2.

In FIGURE 3, a mold core 16 is shown pressed into the cavity 15 of mold 12 until the form of the gob 11 has been conformed to the shape of the mold cavity 15 whereby a press formed article 20 is formed. The mold core 16 is then withdrawn so that a hollow interior 21 of the article 20 can be injected with flows of cooling gases, as is depicted in FIGURE 4.

Referring to FIGURE 4, an injector 50 is depicted for supplying air from a source of pressurized air (not shown) so that, when a newly molded glass article 20 is moved in its mold to a cooling station 40 (that is located as closely as possible to the molding station 30 wherein the article 20 was press molded), a flow of air from the high pressure source of air can be begun and can be continued for a brief interval of time that is sufficient (when combined with a flow of cold cryogen from an adjacent cryogen injector 60) to cool the article 20 and form a skin of solidified glass on its inner surface portions, whereby shape stability is imparted to the article 20.

Because the form in which the cryogen can be injected into the mold from what has been referred to as the "high pressure injector 60" can be a liquid cryogen such as liquid nitrogen, can be a gaseous cryogen such as liquid nitrogen that has just been vaporized to form a fluid of principally gaseous form, or can be a mixture of liquid and gaseous cryogen such as liquid nitrogen that is in the process of evaporating, it will be understood by those skilled in the art that the temperature of the "high pressure injector 60" can be quite low indeed (perhaps nearly as low as the temperature of the liquid cryogen that is being injected), or can range as high as about -1 to 7°C (about 30 to 45 degrees Fahrenheit), depending on what in the way of a cryogen liquid, gas or vapor flow is being injected.

Moreover, due to the extraordinarily cold temperatures that are encountered if liquid cryogen is being injected through the "high pressure injector 60", it will be understood that, even when the injected cryogen is mixed with air, the resulting cooling gas will be far below the range of temperatures at which the molding process has been carried out using present day techniques. A very surprising result that has been found with the implementation and development of the present invention is that liquid cryogen actually can be injected into a newly formed press molded glass article, and that, by mixing the cryogen in the hollow interior of the article with a flow of air, typically ambient air, a cooling gas is provided that cools the article without doing damage either to the article or to the molding apparatus - with the cooling taking place on an extraordinarily expedited basis, whereby the thin interior skin of solidified glass that forms on inner surfaces of glass articles is formed in a very expedited basis, in some instances almost "instantaneously" to the eye of one who views the process.

An injector 60 for cryogen is of a tube-within-a-tube type of construction, with an inner tube 62 being connected to a source (not shown) of high pressure cryogen, and with an outer, coaxially arranged shrouding tube 64 for connection to a relatively low pressure source (not shown) of cryogen gas.

The flow of cryogen that emerges from the inner injector tube 62 is of relatively high velocity, and is operated (together with the relatively high velocity flow of air that issues from the injector tube 50) when a mold containing a newly formed article 20 is positioned beneath the injector tubes 50, 62, 64. This is in contradistinction to the relatively low velocity of the flow of cryogen gas that is maintained without interruption through the outer tube 64, with this low velocity flow serving not only to enhance the normal wind-like flow of cooling air that is provided about glass molding machinery, but also serving to keep the discharge end region of the inner tube 62 purged of ambient air so that, when the flow of high velocity cryogen is stopped from discharging through the injector tube 62, moisture laden ambient air does not enter or otherwise come into contact with the very cold inner injector tube 62; hence, possible problems of condensation of moisture and formation of ice deposits on, about or in the inner tube 62 are obviated.

The flows of air and cryogen from the injector tubes 50, 62 are directed into the hollow inner region of the newly formed article 20 so as to mix within the hollow inner region and to thereby provide a cold cooling medium (of gaseous form once the cryogen has been mixed with air at a location inside the hollow inner region of a newly formed article). An unexpected finding that has come to light as this invention has been developed is that the temperature of the resulting cooling gas range widely from considerably below -18°C to about -1 to 7°C (zero to about 30 to 45 degrees Fahrenheit) or higher, and, depending on the extent of the cooling that is provided by providing this gas at progressively lower temperatures, solidification of newly formed articles can be hastened without detrimentally affecting the articles. It is unexpected, indeed, to find that such rapid shock-like cooling will not hurt the newly formed articles while it functions successfully to effectively hasten the formation of an inner "skin" of solidified glass that will give the article shape stability - and that will enable the article 20 to be removed as quickly as possible from the mold in which the article was formed.

The cost of a cryogen such as nitrogen which is added to high pressure air to form a suitable cooling gas is quite minimal in comparison with the very substantial increases in production of press molded articles that can be achieved. The temperature and duration of the nitrogen mixed with a cold cryogen cooling flow can be adjusted to optimize cryogen usage for a selected rate of article production.

The system of the present invention (like the systems of the referenced US Cases), contravenes what has long been taken for granted by those skilled in the art of molding glass articles, namely that gases which are used to effect blow molding and/or cooling of molded glass articles must not be of significantly reduced temperature if they are to perform their functions without detrimentally affecting the quality of the glass articles being molded. As those skilled in the art of glass molding are quite aware, automated machinery for molding glass containers such as bottles and the like has been in use since the early 1900's; however, to the best knowledge of the inventors hereof, during more than 8 decades of use of such automated machinery (i.e., until the development of the systems of the US Cases), no installation has been made wherein pressurized cold cryogen vapor has been either mixed with or substituted for blow-molding gases and/or cooling gases to provide such gases to the mold cavities of an automated molding machine.

When the basic concept of the inventions of the referenced US Cases was first related to a number of persons who are acknowledged "experts" in the art of manufacturing glass containers an the like, the reception they gave this concept was one of "it cannot possibly work". Stated in another way, what the inventions of the US Cases (and the improved system of the present application) proposes so "flies in the face" of conventional glass molding wisdom as to be "unthinkable". However, in tests of these systems, it has been found that increases in productivity of existing automated glass-molding machinery of at least 15 percent and often more are easily attainable, and at impressively low costs.

Although the invention has been described in its preferred form with a certain degree of particularity, it will be understood that the present disclosure of the preferred form has been made only by way of example, and that numerous changes in the details of construction and the combination and arrangements of parts and the like may be resorted to without departing from the spirit and scope of the invention as hereinafter claimed. It is intended that the patent shall cover, by suitable expression in the appended claims, whatever features of patentable novelty exist in the invention disclosed.

## Claims

1. A method of making a hollow glass article (20) by shaping a quantity of molten glass (11) in a mold cavity (15), comprising the steps of:
   placing a gob (11) of molten glass in a mold cavity (15) that defines the outer shape of the article (20) that is to be formed;
   pressure forming a glass article by pressing a mold core (16) within the mold cavity (15) against the molten glass gob (11) and pressure forcing the molten glass to flow in a space between the mold core (16) and the mold (12) into a desired shape;
   removing the mold core (16) from the hollow interior (21) of the newly formed glass article (20);
   providing a source of pressurized cryogen which has a temperature substantially below that of ambient air; and
   providing a source of pressurized air, **characterized** by
   introducing the cryogen and the flow of air as separate flows into the hollow interior by an injector means (50, 60),
   mixing the separate flows in the hollow interior (21) of the newly formed glass article; and
   providing a gentle, substantially continuous flow of cryogen gas through an outer injector tube (64) that encircles an inner injector tube (62) that is arranged substantially coaxially within the outer tube (64) and that is used to provide the flow of cryogen that is injected into the hollow interior of a newly formed glass article (20), with the gentle, substantially continuous flow serving to prevent moisture laden ambient air from entering the inner injector tube (62).

2. The method of Claim 1, **characterized** in that the cryogen and the air are introduced simultaneously for a pulse time period of sufficient duration to directly cool interior surface portions of the molten glass therein and hasten its solidification, and wherein the cryogen that is introduced is a cryogen vapor.

3. The method of Claim 2, **characterized** in that the cryogen vapor is nitrogen, and the pulse time period of introducing a flow cooling gas is of the same duration of time as is used for a pulse time period for introducing the flow of air.

4. The method of Claim 1, **characterized** in that the cryogen is nitrogen.

5. A method of making a glass article (20) having a hollow interior (21) by press form shaping of a quantity of molten glass (11) in a mold cavity (15), comprising the steps of
   providing a flow of pressurized air and inlet means (50) for ducting the flow of air into the hollow interior (21) of a newly press formed glass article (20),
   providing a flow of pressurized cryogen which has a temperature that is substantially below that of ambient air and inlet means (60) for ducting the flow of cold cryogen into the hollow interior (21) of a newly press formed glass article (20),
   mixing in the hollow interior (21) of a newly formed article (20) the flow of cold cryogen with the flow of air to provide a cooling gas that is substantially lower in temperature than the temperature of ambient air,
   operating the inlet means (50, 60 ) to duct controlled flows of air and cold cryogen into the hollow interior (21) of a newly formed article (20) to cool the molten glass (11) that comprises the article (20) and to hasten its solidification by forming a "skin" of solidified glass on interior surface portions thereof to give the article (20) shape stability to enable the article (20) to be removed quickly after molding from the mold in which the article (20) was press formed,

**characterized** by providing the one inlet (60) used for the introduction of cryogen as a tube-within-a-tube injector, with an outer tube (64) and an inner tube (62) extending substantially coaxially, within the outer tube using the outer tube (64) to provide a gentle, substantially continuous flow of cryogen gas, and using the inner tube (62) to provide the injected flow of cryogen gas into the interior (21) of the article (20).

6. The method of Claim 5, **characterized** in that the tube-within-a-tube inlet (60) is positioned along a path of travel followed by newly formed press molded articles (20) that exit from a molding station in the molds (12) in which the articles (20) were formed, with the positioning of the inlet being located in close proximity to the molding station and being aimed to discharge into the hollow interior of newly formed articles (20) as they move from the molding station along the path of travel.

7. The method of Claim 6, **characterized** in that the tube-within-a-tube inlet (60) is located in fixed relation to a path of travel such that the inlet does not move with respect to the path of travel.

8. The method of Claim 5, **characterized** in that the separate inlets (50, 60) for the introduction of cryogen and air are arranged in close side-by-side relationship for affecting a combination of the flows of air and cryogen that mix within the hollow interior (21) of a newly formed article (20) of glass.

9. The method according to one or more of Claims 5-8, **characterized** in that the cryogen is nitrogen.

10. A hollow glass article (20) manufacturing machine including a mold (12) having a cavity (15) into which a quantity of molten glass (11) is introduced to be conformed to a desired shape as defined by the mold cavity (15), and having gas inlet means (50, 60) for admitting a flow of cooling gas existing of cold cryogen vapour and air and having a temperature that is substantially below the temperature of the ambient air to the mold cavity interiorly with respect to the hollow glass article (20) being formed in the cavity to directly cool interior surface portions of the molten glass therein for at least assisting in conforming a quantity of molten glass to a desired configuration defined by the mold cavity, **characterized** in that said gas inlet means includes:

a) tube-within-a-tube cryogen injector means (60) for separately discharging a relatively low velocity outside flow and a relatively high velocity inside flow of cold cryogen vapor in directions generally toward the hollow interior of a newly formed pressed glass article (20):

b) auxiliary injector means (50) for discharging a separate flow of ambient air in a direction toward the hollow interior of a newly formed pressed glass article (20); and

c) the cryogen and air injector means (60, 50) being arranged to direct flows of cryogen vapor and air into the hollow interior of a newly formed pressed glass article (20) for mixing in the hollow interior to provide said cooling gas.

## Patentansprüche

1. Verfahren zur Herstellung hohler Glaserzeugnisse (20), bei dem eine Masse geschmolzenen Glases (11) in dem Hohlraum (15) einer Form geformt wird, welches folgende Schritte umfaßt:

Einlegen eines Klumpens geschmolzenen Glases (11) in einen Formhohlraum (15), welche die äußere Form des herzustellend Erzeugnisses (20) definiert;

Druckformung eines Glaserzeugnisses, indem innerhalb des Formhohlraums (15) ein Formkern (16) gegen den Klumpen geschmolzenen Glases gedrückt wird und das geschmolzene Glas durch den Druck gezwungen wird, in einen Raum zwischen dem Formkern (16) und der Form (12) zu fließen und die gewünschte Form anzunehmen;

Entfernung des Formkerns (16) aus dem hohlen Inneren (21) des frisch geformten Glaserzeugnisses (20);

Bereitstellung eines unter Druck stehenden Kühlmittels, dessen Temperatur wesentlich unter der der umgebenden Luft liegt; und

Bereitstellung von Preßluft,

**dadurch gekennzeichnet**, daß das Kühlmittel und der Luftstrom mittels Injektorvorrichtungen (50,60) dem hohlen Inneren als getrennte Ströme zugeführt werden, daß die getrennten Ströme im hohlen Inneren (21) des frisch geformten Glaserzeugnisses vermischt werden; und daß ein sanfter, im wesentlichen kontinuierlicher Strom von Kühlmittelgas durch ein äußeres Injektorrohr (64) vorgesehen ist, wobei das äußere Injektorrohr (64) im wesentlichen koaxial um ein inneres Injektorrohr (62) liegt, welches für die Zufuhr des Kühlmittelstroms verwendet wird, der in das hohle Innere des frisch geformten Glaserzeugnisses (20) eingespritzt wird, wobei der sanfte, im wesentlichen kontinuierliche Strom verhindert, daß die feuchtigkeitsbeladene Umgebungsluft in das innere Injektorrohr (62) eintritt.

2. Verfahren nach Anspruch 1, **dadurch gekennzeichnet,** daß das Kühlmittel und die Luft gleichzeitig zugeführt werden, und zwar während einer Pulszeitspanne, die lange genug ist, daß innere Oberflächenteile des geschmolzenen Glases direkt gekühlt werden und deren Erstarrung beschleunigt wird, und daß das Kühlmittel als Kühlmitteldampf zugeführt wird.

3. Vefahren nach Anspruch 2, **dadurch gekennzeichnet,** daß der Kühlmitteldampf Stickstoff ist und daß die Pulszeitspanne, während der der Strom des Kühlgases zugeführt wird, genausolang dauert wie die Pulszeitspanne, in der der Luftstrom zugeführt wird.

4. Verfahren nach Anspruch 1, **dadurch gekennzeichnet,** daß das Kühlmittel Stickstoff ist.

5. Verfahren zur Herstellung eines Glaserzeugnisses (20), das ein hohles Inneres (21) besitzt, durch Druckformung einer Menge geschmolzenen Glases (11) in einem Formhohlraum (15), welches die folgenden Schritte umfaßt:

Bereitstellen eines Preßluft-Stroms und einer Zuleitung (50), durch die der Luftstrom in das hohle Innere (21) des frisch druckgeformten Glaserzeugnisses (20) geleitet wird,

Bereitstellen eines Stroms unter Druck stehenden Kühlmittels, dessen Temperatur wesentlich unter der der umgebenden Luft liegt, und einer Zuleitung (60), durch die der kalte Kühlmittelstrom in das hohle Innere (21) des frisch druckgeformten Glaserzeugnisses (20) geleitet wird,

Vermischen des kalten Kühlmittelstroms mit dem Luftstrom im hohlen Inneren (21) des frisch geformten Erzeugnisses (20), um ein Kühlgas zu erhalten, dessen Temperatur wesentlich niedriger ist als die Temperatur der umgebenden Luft,

Kontrollierte Zufuhr von Luft- und kalten Kühlmittelströmen durch die Zuleitungen (50,60) in das hohle Innere (21) des frisch geformten Erzeugnisses (20), um das geschmolzene Glas (11), aus dem das Erzeugnis (20) besteht, zu kühlen und seine Erstarrung zu beschleunigen, indem sich eine "Haut" erstarrten Glases an den innen liegenden Teilen seiner Oberfläche bildet und dem Erzeugnis (20) Formstabilität verleiht, sodaß es möglich ist, das Erzeugnis (20) rasch nach seiner Druckformung aus der zugehörigen Form zu entfernen,

**dadurch gekennzeichnet,** daß die eine Zuleitung (60), durch die das Kühlmittel zugeführt wird, als Doppelrohr-Injektor vorgesehen ist, mit einem äußeren Rohr (64) und einem inneren Rohr (62), das sich im wesentlichen koaxial zum äußeren Rohr erstreckt, wobei das äußere Rohr (64) dazu dient, einen sanften, im wesentlichen kontinuierlichen Kühlmittelgas-Strom abzugeben, während das innere Rohr (62) dazu dient, den in den Innenraum (21) des Erzeugnisses (20) eingepritzten Kühlmittelgas-Strom abzugeben.

6. Verfahren nach Anspruch 5, **dadurch gekennzeichnet,** daß die Doppelrohr-Zuleitung (60) entlang eines Transportweges angeordnet ist, auf dem die frisch druckgeformten Erzeugnisse (20) aus der Formstation in den Formen (12), in denen sie geformt wurden, kommen, wobei die Zuleitung in nächster Nähe der Formstation angeordnet ist und dazu dient, Kühlmittel in das hohle Innere der frisch geformten Erzeugnisse (20) zu leiten, während diese sich von der Formstation entlang ihres Transportweges bewegen.

7. Verfahren nach Anspruch 6, **dadurch gekennzeichnet,** daß die Doppelrohr-Zuleitung (60) in fixer Position relativ zum Transportweg angeordnet ist, daß sich also die Zuleitung gegenüber dem Transportweg nicht bewegt.

8. Verfahren nach Anspruch 5, **dadurch gekennzeichnet,** daß die getrennten Zuleitungen (50,60) für die Zufuhr von Kühlmittel und Luft nahe beieinander angeordnet sind, sodaß eine Kombination von Luft- und Kühlmittel-Strömen entsteht, die sich im hohlen Inneren (21) des frisch geformten Glaserzeugnisses (20) vermischen.

9. Verfahren nach einem oder mehreren der Ansprüche 5-8, **dadurch gekennzeichnet,** daß das Kühlmittel Stickstoff ist.

10. Eine Maschine zur Herstellung von hohlen Glaserzeugnissen (20), in der in eine Form (12) mit einem Hohlraum (15) eine Masse geschmolzenen Glases (11) eingebracht wird, die eine, durch den Formhohlraum (15) definierte, gewünschte Form annehmen soll, und welche Gaszuleitungen (50,60) besitzt, durch die ein aus kaltem Kühlmitteldampf und Luft bestehender Kühlgasstrom mit einer Temperatur, die wesentlich niedriger als die Temperatur der umgebenden Luft ist, zum Formhohlraum geleitet wird, und zwar ins Innere des hohlen Glaserzeugnisses (20), das im Hohlraum geformt wird, um die inneren Flächenteile des geschmolzenen Glases direkt zu kühlen, sodaß dadurch die Anpassung der Masse geschmolzenen Glases an die durch den Formhohlraum definierte Form unterstützt wird, **dadurch gekennzeichnet,** daß die Gaszuleitungen folgende Bestandteile und Eigenschaften aufweisen:

a) Eine Doppelrohr-Kühlmittel-Injektorvorrichtung (60), durch die getrennt ein äußerer Strom relativ niedriger Geschwindigkeit und ein innerer Strom kalten Kühlmitteldampfes relativ hoher Geschwindigkeit allgemein in Richtung des hohlen Inneren eines frisch druckgeformten Glaserzeugnisses (20) abgegeben werden;

b) Eine Hilfs-Injektorvorrichtung (50), durch die getrennt ein Strom der umgebenden Luft in Richtung des hohlen Inneren eines frisch druckgeformten Glaserzeugnisses (20) abgegeben wird; und

c) die Injektorvorrichtungen (60,50) für Kühlmittel und Luft sind so angeordnet, daß sie die Kühlmitteldampf- und Luftströme in das hohle Innere eines frisch druckgeformten Glaserzeugnisses (20) leiten, damit sich diese im hohlen Inneren vermischen und so das Kühlgas ergeben.

## Revendications

1. Procédé de fabrication d'un article creux en verre (20) par conformation d'une quantité de verre fondu (11) dans une cavité de moule (15) comprenant les étapes suivantes :
   - la mise en place d'une boule (11) de verre fondu dans une cavité de moule (15) qui définit la forme extérieure de l'article (20) devant être conformé ;
   - la conformation sous pression d'un article de verre en pressant un noyau de moule (16) à l'intérieur de la cavité de moule (15) contre la boule de verre fondu (11) et l'application d'une pression forçant le verre fondu à s'écouler dans un espace entre le noyau de moule (16) et le moule (12) jusqu'à prendre une forme voulue ;
   - l'enlèvement du noyau de moule (16) de l'intérieur creux (21) de l'article en verre (20) nouvellement conformé ;
   - la prévision d'une source de cryogène comprimé qui a une température sensiblement inférieure à celle de l'air ambiant ;
   - la prévision d'une source d'air comprimé, caractérisé en ce qu'il consiste :
   - à introduire le cryogène et le courant d'air sous la forme de courants séparés dans l'intérieur creux par un moyen d'injection (50, 60) ;
   - à mélanger les courants séparés dans l'intérieur creux (21) de l'article en verre nouvellement conformé ; et
   - à fournir un courant doux et sensiblement continu de gaz cryogène au travers d'un tube d'injection extérieur (64) qui entoure un tube d'injection intérieur (62) disposé sensiblement coaxialement à l'intérieur du tube extérieur (64) et qui est utilisé pour fournir le courant de cryogène injecté dans l'intérieur creux de l'article en verre nouvellement conformé (20), le courant doux sensiblement continu servant à empêcher l'air ambiant chargé d'humidité de pénétrer dans le tube d'injection intérieur (62).

2. Procédé selon la revendication 1, caractérisé en ce que le cryogène et l'air sont introduits simultanément pendant une période de temps d'impulsion de durée suffisante pour refroidir directement des parties de surface intérieure du verre fondu qui s'y trouve et accélérer leur solidification et en ce que le cryogène qui est introduit est une vapeur de cryogène.

3. Procédé selon la revendication 2, caractérisé en ce que la vapeur de cryogène est l'azote et en ce que la période de temps d'impulsion pour l'introduction du courant de gaz de refroidissement a la même durée que celle qui est utilisée pour la période de temps d'impulsion d'introduction du courant d'air.

4. Procédé selon la revendication 1, caractérisé en ce que le cryogène est l'azote.

5. Procédé de fabrication d'un article en verre (20) ayant un intérieur creux (21) par conformation de la forme sous pression d'une quantité de verre fondu (11) dans une cavité de moule (15) comprenant les étapes suivantes :
   - la prévision d'un courant d'air comprimé et de moyens d'entrée (50) pour conduire le courant d'air dans l'intérieur creux (21) d'un article en verre (20) nouvellement conformé par pression ;
   - la prévision d'un courant de cryogène comprimé qui a une température sensiblement inférieure à celle de l'air ambiant et d'un moyen d'entrée (6Ø) pour conduire le courant de cryogène froid dans l'intérieur creux (21) d'un article en verre (2Ø) nouvellement conformé par pression ;

- le mélange dans l'intérieur creux (21) d'un article (2Ø) nouvellement conformé du courant de cryogène froid et du courant d'air pour fournir un gaz de refroidissement dont la température est sensiblement plus basse que la température de l'air ambiant ;

- l'activation des moyens d'entrée (5Ø, 6Ø) pour conduire des courants maîtrisés d'air et de cryogène froid dans l'intérieur creux (21) d'un article (2Ø) nouvellement conformé pour refroidir le verre fondu (11) qui constitue l'article (2Ø) et pour accélérer sa solidification en formant une "peau" de verre solidifié sur les parties superficielles internes de celui-ci et donner à l'article (2Ø) une stabilité de forme pour permettre à l'article (2Ø) d'être enlevé rapidement, après moulage, du moule dans lequel l'article (2Ø) a été conformé par pression ;

caractérisé en ce qu'il consiste à prévoir ladite entrée (6Ø) utilisée pour l'introduction de cryogène sous la forme d'un injecteur du type tube dans tube, avec un tube extérieur (64) et un tube intérieur (62) s'étendant sensiblement coaxialement à l'intérieur du tube extérieur en utilisant le tube extérieur (64) pour donner un courant doux et sensiblement continu du gaz cryogène et en utilisant le tube intérieur (62) pour fournir un courant injecté de gaz cryogène dans l'intérieur (21) de l'article (2Ø).

6. Procédé selon la revendication 5, caractérisé en ce que l'entrée (6Ø) du type tube dans tube est disposée le long d'une voie de déplacement suivie par les articles moulés (2Ø) nouvellement conformés par pression qui sortent d'une station de moulage dans les moules (12) dans lesquels les articles (2Ø) ont été conformés, le positionnement de l'entrée étant tel qu'elle est disposée à proximité immédiate de la station de moulage, avec pour cible de déboucher dans l'intérieur creux des articles (2Ø) nouvellement conformés tandis qu'ils se déplacent depuis la station de moulage le long de la voie de déplacement.

7. Procédé selon la revendication 6, caractérisé en ce que l'entrée (6Ø) du type tube dans tube est disposée selon une relation fixe par rapport à la voie de déplacement de telle sorte que l'entrée ne se déplace pas par rapport à ladite voie de déplacement.

8. Procédé selon la revendication 5, caractérisé en ce que les entrées séparées (5Ø, 6Ø) pour l'introduction du cryogène et de l'air sont disposées en relation côte à côte proche pour créer une combinaison de courants d'air et de cryogène qui se mélangent dans l'intérieur creux (21) d'un article (2Ø) en verre nouvellement conformé.

9. Procédé selon l'une ou plusieurs des revendications 5 à 8, caractérisé en ce que le cryogène est l'azote.

10. Machine de fabrication d'un article (2Ø) en verre creux comprenant un moule (12) ayant un cavité (15) dans laquelle une quantité de verre fondu (11) est introduite pour être conformée à une forme voulue telle que définie par la cavité du moule (15) et ayant des moyens d'entrée de gaz (5Ø, 6Ø) pour admettre un courant de gaz de refroidissement formé de vapeur de cryogène froid et d'air et ayant une température qui est sensiblement inférieure à la température de l'air ambiant, dans la cavité de moule, intérieurement par rapport à l'article (2Ø) en verre creux en cours de conformation dans la cavité pour refroidir directement des parties superficielles intérieures du verre fondu qui s'y trouve et au moins contribuer à la conformation d'une quantité de verre fondu en une configuration voulue définie par la cavité de moule, caractérisée en ce que lesdits moyens d'entrée de gaz comprennent :

- a) un moyen d'injection de cryogène (6Ø) du type tube dans tube pour délivrer séparément un courant extérieur ayant une vitesse relativement faible et un courant intérieur ayant une vitesse relativement élevée de vapeur de cryogène froid dans des directions allant généralement vers l'intérieur creux d'un article en verre (2Ø) nouvellement conformé par pression ;

- b) des moyens d'injection auxiliaires (5Ø) pour délivrer un courant séparé d'air ambiant dans une direction allant vers l'intérieur creux d'un article (2Ø) nouvellement conformé par pression ;

- c) des moyens d'injection de cryogène et d'air (6Ø, 5Ø) étant disposés de façon à diriger des courants de vapeur de cryogène et d'air dans l'intérieur creux d'un article en verre (2Ø) nouvellement conformé par pression pour qu'ils se mélangent dans l'intérieur creux et fournissent ledit gaz de refroidissement.

Fig. 1

Fig. 2

Fig. 3

Fig. 4